Europäisches Patentamt

European Patent Office

Office européen des brevets

(11) Numéro de publication : **0 132 182**
**B1**

(12) **FASCICULE DE BREVET EUROPÉEN**

(45) Date de publication du fascicule du brevet :
12.11.86

(51) Int. Cl.⁴ : **F 01 D 11/08**

(21) Numéro de dépôt : 84401363.1

(22) Date de dépôt : 27.06.84

(54) Dispositif d'étanchéité d'aubages mobiles de turbomachine.

(30) Priorité : 07.07.83 FR 8311646

(43) Date de publication de la demande :
23.01.85 Bulletin 85/04

(45) Mention de la délivrance du brevet :
12.11.86 Bulletin 86/46

(84) Etats contractants désignés :
DE FR GB

(56) Documents cités :
CH-A- 408 960
FR-A- 1 365 231
FR-A- 2 228 967
FR-A- 2 293 594
FR-A- 2 509 373
GB-A- 1 484 288
GB-A- 2 087 979

(73) Titulaire : SOCIETE NATIONALE D'ETUDE ET DE
CONSTRUCTION DE MOTEURS D'AVIATION,
"S.N.E.C.M.A."
2 Boulevard Victor
F-75015 Paris (FR)

(72) Inventeur : Bart, Jacques
24, rue Jean Giono
F-91000 Evry (FR)
Inventeur : Jourdain, Gérard Ernest André
4, Résidence l'Arcadie Saintry-Sur-Seine
F-91100 Corbeil Essonnes (FR)
Inventeur : Rambach, Daniel
51bis, avenue de Ségur
F-75007 Paris (FR)

(74) Mandataire : Moinat, François
S.N.E.C.M.A. Service des Brevets Boîte Postale 81
F-91003 Evry Cedex (FR)

## Description

L'invention concerne une turbomachine munie d'un dispositif d'étanchéité d'aubages mobiles de turbomachine.

On connaît par EP-A-0115 984 (ce document appartient à l'état de la technique visé à l'article 54 (3) CBE) une disposition du type concerné par l'invention dans laquelle des secteurs portant une garniture d'étanchéité sont soumis successivement, pendant une phase transitoire d'accélération mécanique, à un premier asservissement en position radiale par des éléments solidaires d'une virole intérieure, qui se dilate rapidement pendant ladite phase d'accélération mécanique, puis pendant une deuxième phase postérieure de stabilisation thermique (qui peut durer une dizaine de minutes par exemple à comparer à la durée de cinq à six secondes par la première phase) à un deuxième asservissement se substituant au premier, asservissant lesdits secteurs en position radiale à un anneau extérieur qui se dilate lentement.

Un des objectifs de la présente invention qu'elle a également en commun avec la précédente demande citée ci-dessus est d'assurer dans les conditions de fontionnement de la turbomachine un jeu entre les extrémités d'aubes et la garniture d'étanchéité qui soit minimal, mais toujours positif afin d'éviter l'usure de ladite garniture, usure qui provoquerait un jeu et par conséquent des fuites dans les phases ultérieures de fonctionnement, ces fuites étant préjudiciables pour le rendement de la turbomachine, pour l'obtention d'une poussée maximale dans les applications aéronautiques et pour la réserve au pompage.

Par ailleurs, FR-A-2 293 594 décrit un dispositif d'étanchéité pour un turbomoteur dans lequel un organe annulaire intérieur présente une inertie thermique plus faible qu'un organe extérieur auquel il est lié.

La solution proposée par EP-A-0115 984 cité ci-dessus présente toutefois l'inconvénient de nécessiter des joints d'étanchéité sur les bords latéraux des secteurs portant la garniture d'étanchéité, ces joints étant à l'origine de frottements nuisibles.

L'invention évite ces inconvénients par la suppression de tels joints d'étanchéité mais vise toutefois à obtenir les mêmes résultats, en particulier ceux qui concernent le rendement de la turbomachine et pour cela, un objectif de l'invention est d'assurer des débits de fuite vers la veine de gaz chauds qui soient très faibles dans le cas le plus défavorable, et même pratiquement nuls dans la plupart des cas.

La turbomachine munie d'un dispositif d'étanchéité d'aubages mobiles du type précité est caractérisée selon la présente invention en ce que ladite virole intérieure comporte des éléments de raidissement qui accroissent son inertie mécanique et est monolithique, en ce que les éléments de liaison asservissant les secteurs à la virole intérieure comportent des éléments élastiques permettant le déplacement radial des secteurs asservis à l'anneau extérieur durant la phase de stabilisation thermique sans réaction directe sur la virole intérieure et en ce que lesdits secteurs comportent à leurs extrémités amont et aval au moins une série d'appuis par des bourrelets sur au moins une série d'épanouissements périphériques des crochets asservissant les secteurs à l'anneau extérieur.

De manière avantageuse, les éléments de liaison entre les secteurs et la virole intérieure sont constitués de vis radiales qui sont fixées solidairement sur la virole intérieure et dont les têtes sont emprisonnées en laissant un jeu radial dans des empochements prévus vers les quatre coins des secteurs et de ressorts entourant les tiges des vis et montés en compression entre les secteurs et la virole intérieure.

L'invention sera mieux comprise ainsi que d'autres avantages éventuels par la description de modes de réalisation, en référence aux dessins annexés dans lesquels :

la figure 1 représente une coupe longitudinale suivant I-I de la figure 2 d'un premier mode de réalisation du dispositif d'étanchéité conforme à l'invention,

la figure 2 est une vue en coupe suivant II-II de la figure 1 du dispositif représenté à la figure 1,

la figure 3 est une vue en coupe suivant III-III de la figure 1 du dispositif représenté à la figure 1,

la figure 4 est une vue en perspective cavalière avec arraché d'une portion du dispositif représenté à la figure 1,

la figure 5 est une vue analogue à la figure 1 représentant en coupe longitudinale un second mode de réalisation du dispositif d'étanchéité selon l'invention,

la figure 6 est une vue en perspective cavalière avec arraché d'une portion du dispositif représenté à la figure 5,

la figure 7 est une vue analogue à la figure 3 représentant une variante du mode de centrage de l'anneau à grande inertie thermique.

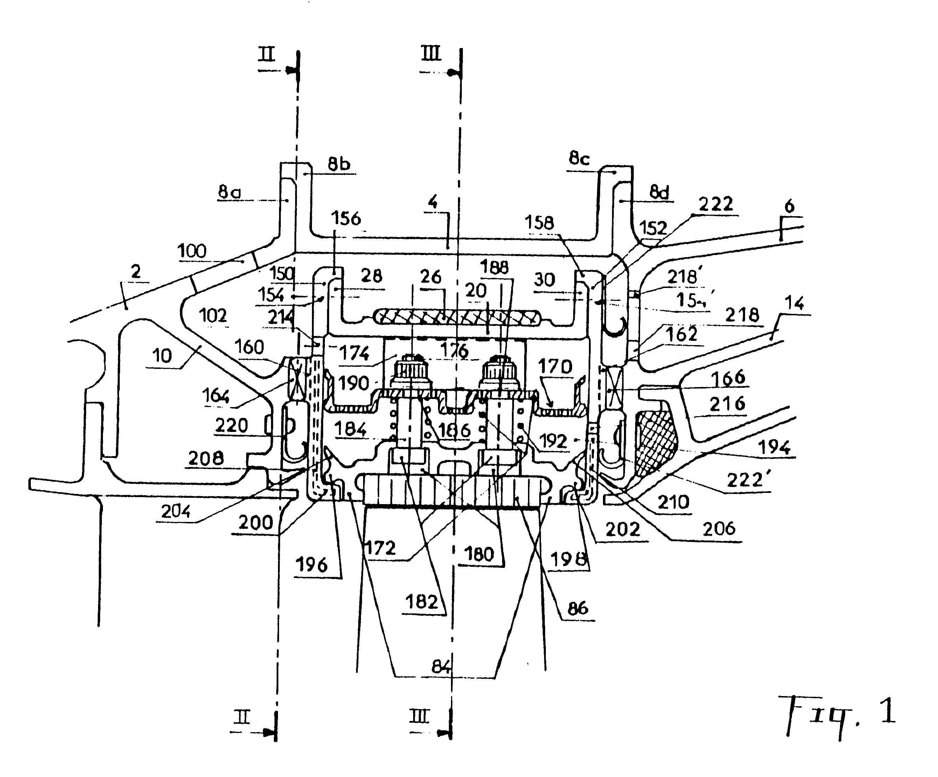

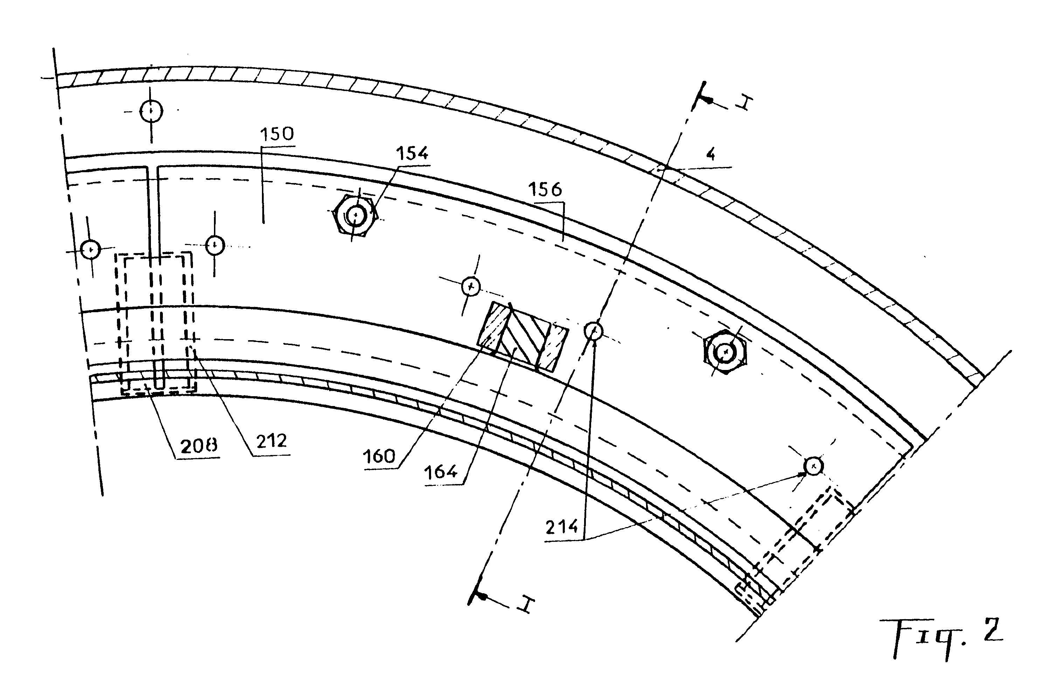

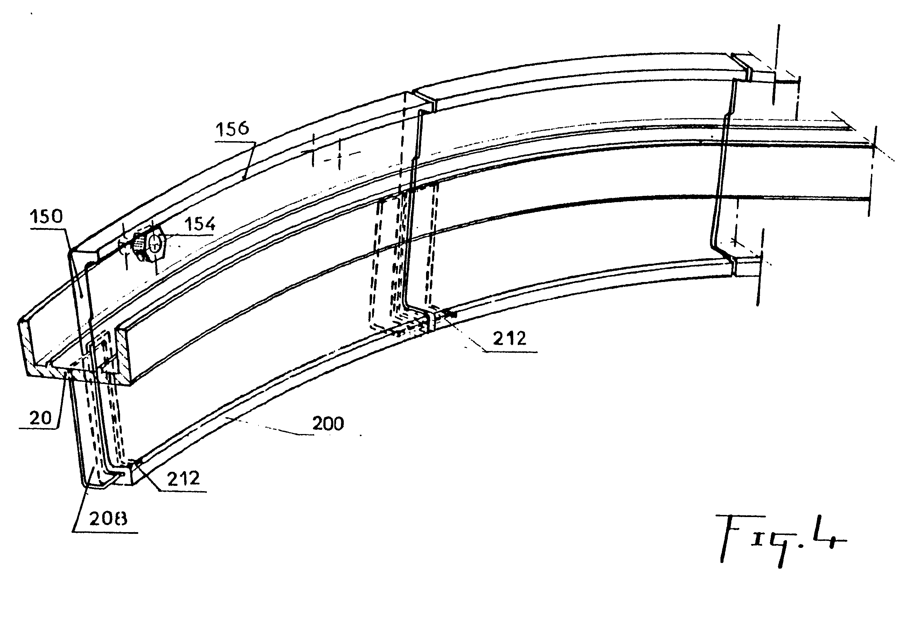

La figure 1 représentant un premier mode de réalisation de l'invention montre un carter de turbine en trois parties, une partie amont 2 en amont de la roue de turbine, liée par une bride 8a à une bride amont 8b d'une partie médiane 4, au droit de la roue de turbine, cette partie médiane 4 comportant une bride aval 8c, liée à une bride 8d d'une partie aval 6, en aval de la roue de turbine. On y voit aussi, en se reportant également par souci de clarté aux figures 2, 3, 4 un anneau extérieur monolithique 20, à grande inertie, calorifugé, dans l'exemple représenté, seulement vers l'extérieur par un calorifugeage 26. Bien entendu, on ne sortirait pas du cadre de ce mode de réalisation de l'invention en prévoyant aussi un calorifugeage intérieur. Dans l'exemple représenté, cet anneau est raidi seulement par ses extrémités par des brides radiales amont 28 et aval 30, mais il pourrait bien entendu comporter aussi des brides intermédiaires pour le raidir davantage. Dans le mode de réalisation représenté sur la figure 1, l'anneau 20 est centré à la fois dans les parties amont 2 et aval 6 de carter de la façon suivante. Il est lié à des crochets sectorisés amont 150 et aval 152 par des boulons amont 154 et aval 154' (voir aussi figures 2 et 4), ces crochets sectorisés comportant vers l'extérieur des rebords 156 et 158 (voir aussi figure 2) coopérant avec l'extrémité des brides radiales amont 28 et aval 30. Les crochets sectorisés eux-mêmes, solidarisés de ce fait entre eux, en même temps qu'à l'anneau 20 monolithique comportent au moins trois saillies régulièrement réparties sur la périphérie 160 vers l'amont, 162 vers l'aval, qui coopèrent avec le même nombre d'empochements, 164 vers l'amont, 166 vers l'aval, ménagés dans un prolongement 10 de la partie de carter 2 vers l'amont et dans le prolongement 14 de la partie de carter 6 vers l'aval. Une saillie 160 et un empochement 164 sont représentés à la figure 2. Le nombre de ces saillies et empochements est sujet à option pourvu qu'il soit supérieur à trois et que saillies et empochements soient régulièrement répartis sur la périphérie pour que l'anneau 20 reste centré. Cet anneau 20 dont le rôle sera décrit en détail plus loin a une épaisseur et/ou un calorifugeage ajustés pour avoir le même temps de réponse que le temps de réponse total thermique et centrifuge de la roue ailetée après stabilisation complète sur le plan thermique, et est constitué d'un matériau choisi de façon que son coefficient de dilatation permette un déplacement radial correspondant par exemple à la différence radiale de rayon des extrémités d'aubes entre l'arrêt et la charge maximale.

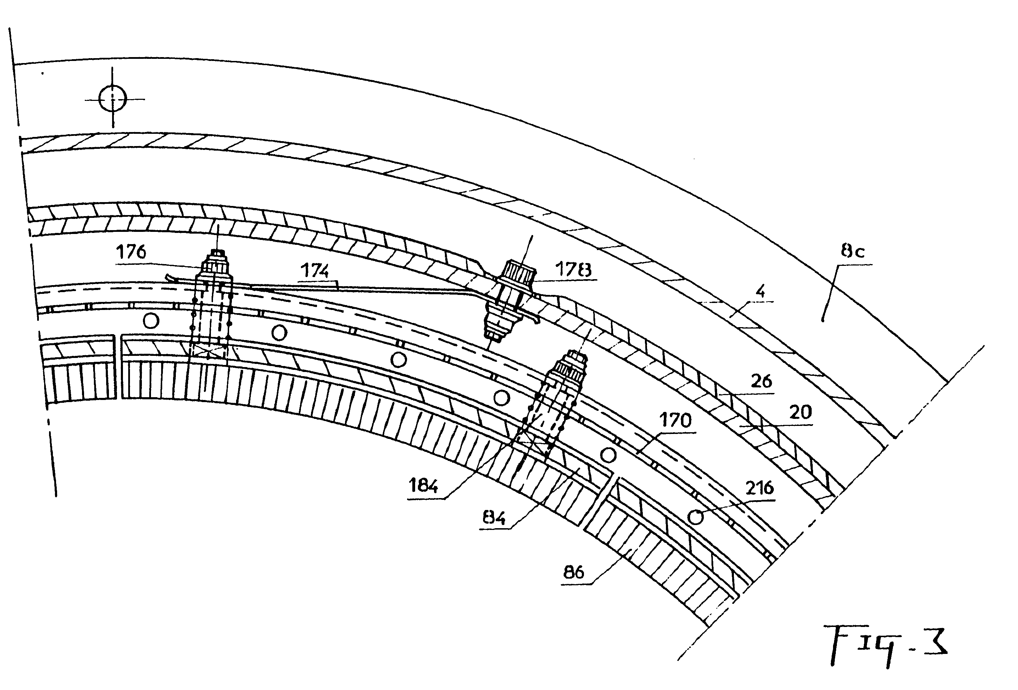

Dans le mode de réalisation représenté sur la figure 1, une virole intérieure 170 dont le rôle sera précisé plus loin comporte des accélérateurs d'échange lui conférant un temps de réponse aussi proche que possible du temps de réponse du disque à la dilatation centrifuge en accélération (respectivement rétraction centrifuge en décélération) augmentée (respectivement diminuée) au moins partiellement de la dilatation (respectivement rétraction) thermique des aubes. Cette virole 170 est, conformément à l'invention, monolithique et comporte dans le mode de réalisation représenté des éléments 172 lui conférant une inertie mécanique relativement importante dans le sens radial. Elle est centrée dans la virole 20, par exemple par au moins trois pattes obliques 174 relativement longues et flexibles, régulièrement réparties sur la périphérie, la reliant à la virole 20 (voir figure 3). Ces pattes 174 sont reliées par deux boulons 176 longitudinalement espacés 178 à l'anneau 20. Elles maintiennent la virole 20 centrée, bien qu'en la laissant pratiquement libre de se dilater ou de se rétracter (liberté donnée par le fait qu'elles sont flexibles). Quoique le nombre de pattes 174 soit sujet à option, pourvu qu'elles soient au nombre d'au moins trois, et régulièrement réparties sur la périphérie et pour simplifier la démonstration de ce qu'elles maintiennent centrée la virole 170 par rapport à l'anneau 20, on supposera qu'en fait il y a quatre pattes, espacées de 90°, l'une d'entre elles étant en haut. Pour une accélération verticale (par exemple due à une ressource exécutée par l'avion propulsé par la turbomachine), les pattes obliques du haut et du bas peuvent fléchir, et la virole 170 pourrait se décentrer vers le bas sous l'effet de ce facteur de charge s'il n'y avait pas les pattes obliques horizontales. Mais celles-ci, du fait de leur fixation à la fois par deux boulons longitudinalement espacés sur la virole 170 et par deux boulons longitudinalement espacés sur l'anneau 20, ne permettent pas ce décentrage vers le bas. Elles travaillent en effet au cisaillement pour un tel mouvement et le déplacement permis en cisaillement est pratiquement négligeable. Inversement, pour une charge latérale, les pattes dans le plan horizontal peuvent certes fléchir, mais ce sont les pattes du haut et du bas qui interdisent un mouvement de décentrage latéral de la virole monolithique 170. L'homme du métier connaît du reste bien ce système de centrage, qui est obtenu dès que le nombre de pattes est de trois au moins pourvu que ces pattes soient régulièrement réparties, mais ce système est particulièrement bien adapté à la présente invention. Il est à noter que sur la figure 3, on a représenté les boulons de fixation de la patte 174 sur la virole 170, comme intégrés au système de fixation des secteurs sur la virole 170, qui sera décrit plus loin, en vue d'un gain de masse.

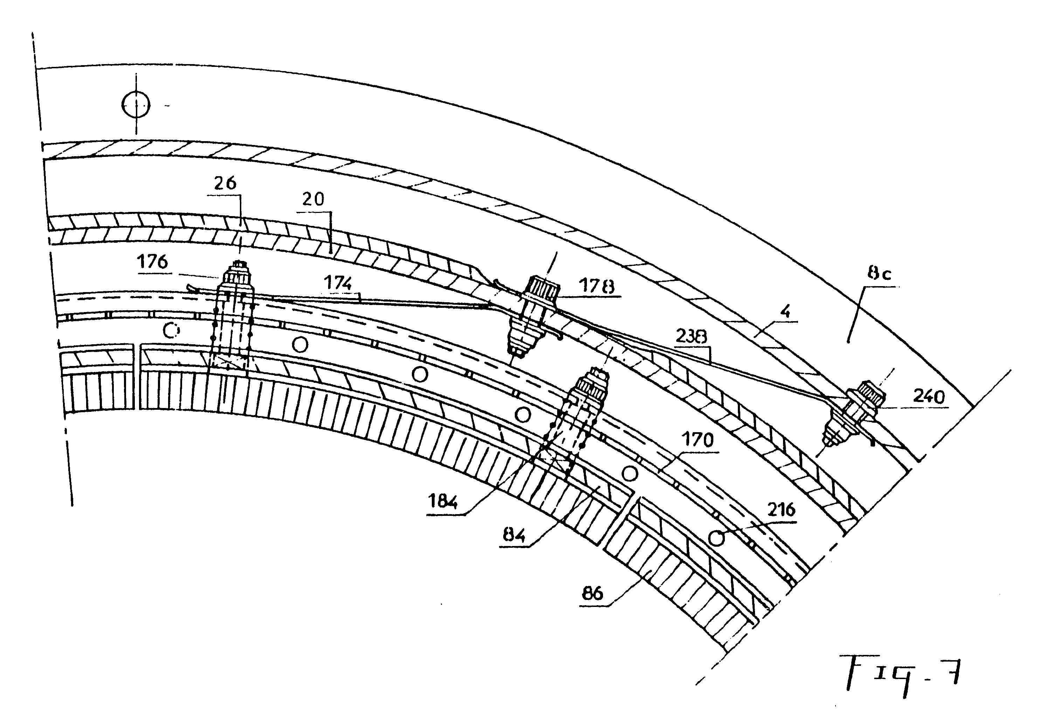

Bien entendu, on pourrait employer, sans sortir du cadre de la présente invention, d'autres moyens, connus de l'homme du métier, pour centrer la virole 170 dans l'anneau 20, notamment un système de saillies et empochements, analogues aux saillies 160 et 162 et aux empochements 164 et 166 décrits précédemment pour le centrage de l'anneau 20 dans le carter 2, 4, 6 de turbine. Bien entendu, également, le centrage de l'anneau 20 dans le carter de turbine peut aussi être obtenu par un système d'au moins trois pattes obliques flexibles fixées d'une part à l'anneau 20, d'autre part au carter 4, comme cela sera décrit en détails plus loin en référence à la figure 7.

Dans ce mode de réalisation de l'invention, les éléments de garniture d'étanchéité 86, maintenus dans des secteurs 84, sont liés d'une façon élastique à la virole à faible temps de réponse. Afin d'obtenir une virole 170 monolithique, des éléments élastiques sont rapportés qui ne font pas partie de la virole, et leur rôle va être expliqué maintenant.

Les secteurs 84, qui peuvent être par exemple en nombre double des crochets sectorisés 150, 152 (ou même davantage), comportent des empochements 180 vers les quatre coins de chaque secteur. Les têtes 182 de vis radiales 184 sont emprisonnées dans ces empochements mais en laissant un jeu radial au moins égal à la dilatation totale de la roue ailetée entre l'arrêt et le plein gaz. Les vis 184 comportent du côté de leur extrémité filetée, vers l'extérieur radialement, un épaulement 186 qui coopère avec des trous 188 percés dans la virole 170, et avec des écrous 190 de sorte que les vis radiales 184 sont solidairement fixées à la virole 170.

D'autre part, les secteurs 84 portant les garnitures d'étanchéité 86, sont maintenus aussi éloignés que possible de la virole 170 par des ressorts en compression 192, entourant les tiges des vis 184 et s'appuyant d'une part sur les secteurs 84, d'autre part sur la virole 170.

Enfin, dans le mode de réalisation représenté sur la figure 1, les secteurs 84 comportent à l'amont aussi bien qu'à l'aval, des dispositifs destinés à assurer dans la majorité des cas de fonctionnement une étanchéité pratiquement complète entre d'une part la veine de gaz chauds et d'autre part l'espace 194, compris entre la virole 170 et les secteurs 84, et dans un petit nombre de cas seulement une étanchéité sinon complète, du moins raisonnablement assurée entre la veine de gaz chauds et l'espace 194. Les secteurs 84 comportent, pour ce faire, des bourrelets 196 vers l'amont, 198 vers l'aval, qui coopèrent, dans l'exemple figurant au dessin, avec des épanouissements périphériques 200 tournés vers l'aval des crochets sectorisés 150 amont et 202 tournés vers l'amont des crochets sectorisés aval 152.

Ces bourrelets 196 laissent un jeu longitudinal faible mais positif, respectivement avec la partie radiale des crochets sectorisés 150 et 152, assurant ainsi, lorsque les bourrelets 196, 198 ne sont pas en appui, par suite de la dilatation thermique de la virole 170, que le jeu permettant des fuites soit maintenu dans des limites aussi faibles que possible. De plus, dans la version représentée sur la figure 1, chaque secteur 84 comporte, radialement plus vers l'extérieur, une léchette 204 pour l'amont, 206 pour l'aval laissant un jeu faible mais positif avec la partie radiale des crochets sectorisés 150, 152, constituant avec les bourrelets 196, 198 un labyrinthe. Ce jeu positif aussi bien en amont qu'en aval permet donc un déplacement des secteurs 84 sous l'effet des ressorts 192, sans pour autant autoriser des fuites d'air importantes lorsque l'appui des bourrelets 196 et 198 n'est plus assuré sur les épanouissements périphériques 200, 202 des crochets sectorisés 150, 152. De plus, l'étanchéité d'un des crochets sectorisés avec ses voisins peut être assurée, d'une façon connue, par exemple par des lamelles 208 pour les crochets sectorisés amont visibles aussi sur la figure 4, insérées dans les fentes 212 prévues à cet effet dans l'épaisseur des crochets sectorisés voisins. Il en est de même vers l'aval où l'étanchéité peut être assurée par des lamelles 210.

D'autre part, l'air de ventilation prélevé à un des étages haute pression du compresseur, par exemple le dernier, est envoyé par des orifices 100 dans une enceinte annulaire 102 d'où il passe par des trous 214, percés dans les crochets sectorisés amont 150, dans l'espace compris entre l'anneau extérieur 20 et la virole 170, puis traverse la virole 170 par des trous multiples non représentés sur la figure 1 et très schématiquement représentés sur la figure 3, pour assurer à la virole 170 un temps de réponse (par exemple à 98 %) en température très court et sensiblement égal à la dilatation (respectivement rétraction) centrifuge de l'aube et du disque, augmenté au moins en partie de la dilatation (respectivement rétraction) thermique des aubes. Il s'en échappe par des trous 216 (voir aussi figure 3) percés dans les crochets sectorisés aval 152, puis, en contournant les pattes et empochements locaux 162, 166 (ou les pattes flexibles équivalentes), il s'échappe vers l'aval par des trous 218 d'où il peut, soit être envoyé, si la pression résiduelle le permet, à un étage ultérieur de turbine (par exemple pour refroidir le distributeur suivant), soit remis dans la veine de gaz, de préférence sans provoquer de perturbations.

Une partie du débit alimentant l'enceinte 102 peut également être envoyé à l'extérieur de l'anneau 20, d'où il s'échappe par des trous calibrés 218', vers l'aval de la turbine en se mélangeant avec le débit ayant passé par les trous 218.

Enfin, des joints 220 vers l'amont et 222, 222' vers l'aval à frottement doux assurent l'étanchéité avec un prolongement de la bride 10 vers l'amont et avec la bride 14 vers l'aval. Mais il faut souligner que ce frottement n'a pas d'influence nocive sur la position radiale ou la concentricité des secteurs 84, puisqu'il ne s'exerce que sur des éléments soumis à des dilatations (ou rétractions) thermiques et n'a par conséquent qu'une influence négligeable, comme il est bien connu de l'homme du métier sur les déplacements dus à la dilatation thermique, l'ordre de grandeur des effets de frottement étant considérablement plus faible que les effets de la dilatation thermique.

·On va décrire à présent le mode de fonctionnement du dispositif objet de ce mode de réalisation de l'invention en supposant un cycle complet à partir de la vitesse nulle jusqu'au point de fonctionnement stabilisé à la charge maximale, puis retour au ralenti et arrêt.

Au cours du démarrage, le rayon des extrémités d'aubes augmentera (dilatation centrifuge et thermique) et on supposera que les dimensions caractéristiques (de la roue ailetée, et du dispositif d'étanchéité objet de l'invention) sont telles qu'au ralenti stabilisé les divers éléments sont dans la position représentée à la figure 1, le jeu entre l'extrémité des aubes et les garnitures d'étanchéité 86 des secteurs 84 étant positif, mais extrêmement faible (bien qu'il ait été représenté assez grand pour faciliter la compréhension), et les bourrelets 196, respectivement 198, étant en appui sur les crochets 200, respectivement 202, assurant une quasi-étanchéité aux bords amont et aval des secteurs 84.

Au cours d'une accélération jusqu'au plein gaz, l'extrémité des aubes va augmenter d'abord très rapidement (de l'ordre de 5 à 6 secondes) par suite de la dilatation centrifuge du disque et des aubes, dilatation qui suit exactement l'accélération mécanique de la turbomachine, augmentée au moins d'une partie de la dilatation thermique des aubes (du fait que celles-ci ont de faibles épaisseurs et de grandes surfaces d'échange, leur temps de réponse est généralement du même ordre que l'accélération mécanique). Mais parallèlement, le flux d'air chaud arrivant par les orifices 100 dans l'enceinte 102, puis par les trous 214, à la partie extérieure de la virole 170, traverse celle-ci par des multitrous schématisés figure 7 pour s'échapper par les trous 116, puis en contournant les saillies et empochements 162, 166, par les trous 218. Sous réserve que les accélérateurs d'échange, par exemple les multitrous soient adaptés à cette dilatation rapide des extrémités d'aubes, c'est dans le même temps (de l'ordre de 5 à 6 secondes) que la virole 170 s'échauffera, donc se dilatera. Si le matériau de la virole 170 a été choisi convenablement en ce qui concerne son coefficient de dilatation, la dilatation radiale de la virole sera égale au déplacement radial des extrémités d'aubes et se fera en même temps et le jeu initial sera conservé entre les extrémités d'aubes et la garniture d'étanchéité 86. En même temps, les bourrelets 196 (respectivement 198) quittent leur appui sur les crochets 200 (respectivement 202), mais la fuite d'air provenant du compresseur haute pression (à une pression supérieure donc à celle de la veine) ne contournera les secteurs 84 vers l'amont et vers l'aval qu'avec un très faible débit, du fait que le labyrinthe constitué par la léchette 204 et le bourrelet 196 vers l'amont (respectivement la léchette 206 et le bourrelet 198 vers l'aval) freine énergiquement le mouvement centripète de l'air.

Il faut, de plus, remarquer que cette fuite est non seulement faible, mais qu'elle dure peu de temps, de l'ordre de quelques dizaines de secondes. En effet, l'anneau 20 va se dilater, lentement par rapport à la virole 170, par suite de son échauffement thermique retardé par son calorifugeage et son inertie. Toutefois, cet échauffement de l'anneau 20 suit une loi bien connue des thermiciens, qui fait que la dilatation se fait au début assez rapidement, puis de plus en plus lentement, la stabilisation complète thermique n'étant théoriquement obtenue qu'au bout d'un temps infini (c'est la raison pour laquelle on parle généralement d'un temps de réponse à 98 %). Par l'appui de leurs brides 28 (respectivement 30) sur les rebords 156 (respectivement 158) des crochets sectorisés 150 (respectivement 152) dans un premier temps les surfaces d'appui des crochets 200 proprement dits (respectivement 202) vont progressivement se rapprocher des bourrelets 196 (respectivement 198) jusqu'à l'appui total et, de ce fait, en quelques dizaines de secondes (dans un exemple caractéristique en 35 secondes), l'étanchéité amont et aval des secteurs sera rétablie. Puis, l'anneau 20 continuant à se dilater (son temps de réponse par exemple à 98 % étant le même (grâce notamment à son calorifugeage adapté à cet effet) que celui de la dilatation thermique de la jante puis du moyeu du disque, de l'ordre dans un cas caractéristique de 10 minutes), il entraînera par appui des crochets 200 et 202 sur les bourrelets 196, 198, les secteurs 84 portant la garniture d'étanchéité 86.

Ce dernier déplacement est possible du fait que les têtes de vis 182 ne comblent pas les empochements 180 et que ceux-ci ont une dimension radiale égale à la hauteur des têtes de vis augmentée de la dilatation totale (par exemple) des extrémités d'aubes.

Et il faut remarquer que pendant toute cette stabilisation thermique, à part quelques dizaines de secondes au début, puis pendant tout le régime permanent au plein gaz (ou à un régime partiel au-dessus du ralenti), l'étanchéité par appui radial est effectivement assurée.

On suppose maintenant qu'à partir du régime maximum stabilisé, on ramène la turbomachine au ralenti (ou en tout cas à un régime partiel). Dans un temps très court, la contraction centrifuge du disque et de l'arbre, et la contraction thermique de l'aube va se produire. Dans le même temps, et par suite du débit d'air venu du compresseur (moins chaud à régime partiel et au ralenti qu'au plein gaz), la virole 170 va se contracter radialement, entraînant les vis 184. Mais celles-ci pourront se déplacer radialement dans le sens centrifuge par suite du jeu prévu, du fait que l'anneau 20 ne se contracte que lentement, les ressorts 192 maintenant en permanence les bourrelets 196, 198 en appui sur les crochets 200, 202. Il y aura donc une étanchéité assurée en amont et en aval des secteurs pendant toute la phase de décélération, depuis son début jusqu'à stabilisation thermique au ralenti, où on se retrouvera comme au début du cycle dans la disposition représentée en figure 1.

On voit donc que l'invention permet avantageusement d'assurer :

— qu'il n'y a jamais interférence entre extrémité d'aubes et garniture d'étanchéité 86 — donc pas d'usure de celle-ci, sauf incident mécanique ;

— qu'il y a un jeu très réduit entre extrémité des aubes et garniture d'étanchéité 86, pendant tous les régimes permanents et pendant le régime transitoire d'accélération (le jeu augmente pendant le régime transitoire de décélération, mais cette augmentation du jeu est acceptable d'une part du fait qu'il s'agit de transitoire, d'autre part qu'il s'agit de régimes faibles, où le niveau de poussée en tous cas n'est que de deuxième importance, et la consommation relativement faible) ;

— qu'il n'y a aucun frottement empêchant les mouvements radiaux des secteurs d'étanchéité notamment lorsqu'en décélération les ressorts 192 imposent aux bourrelets 196, 198 d'être en appui sur les crochets 200, 202, les ressorts 192 pouvant également être montés sous contrainte et exercer un effort à l'arrêt ;

— que les fuites de débit venant du compresseur vers la veine sont pratiquement interdites par lesdits appuis, sauf pendant une accélération mécanique, où ces fuites sont fortement freinées par un système de labyrinthe 196 et 204 vers l'amont 198 et 206 vers l'aval et seulement pendant quelques dizaines de secondes (sur un total de l'ordre de 10 minutes par exemple pendant et après l'accélération mécanique).

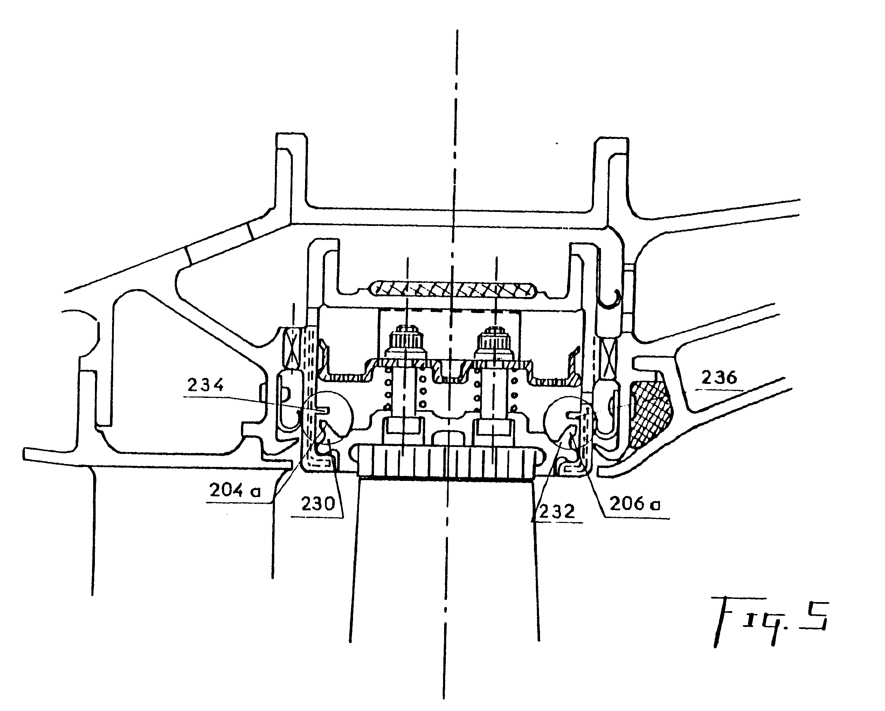

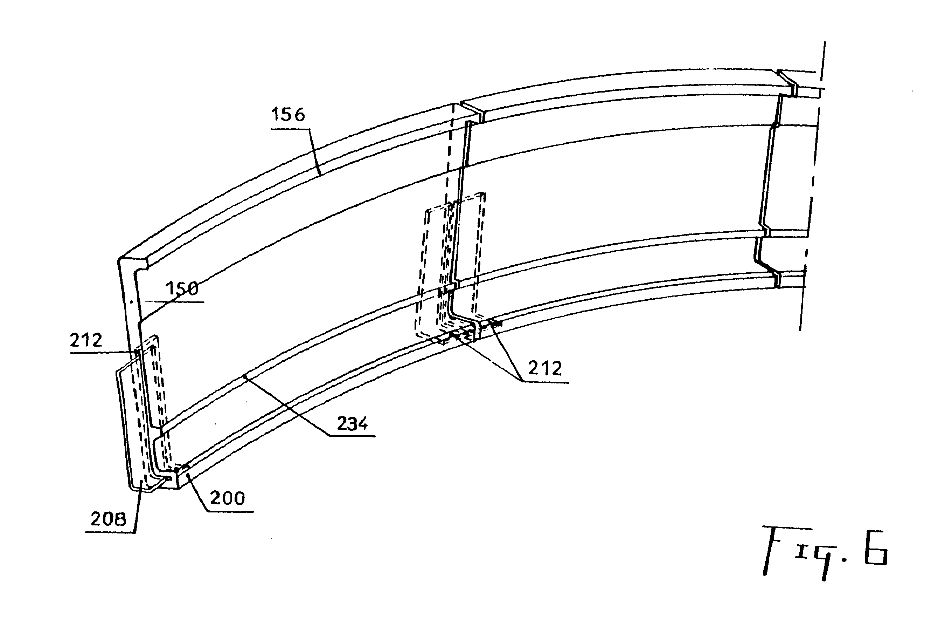

Sur les figures 5 et 6 on a représenté toutes choses égales par ailleurs, donc sans qu'il soit besoin d'en détailler la description (on se reportera à la description faite précédemment pour les figures 1 à 4) un second mode de réalisation qui améliore encore l'étanchéité pendant la première phase transitoire d'accélération. Les léchettes 204a et 206a des secteurs 84 ont une forme un peu différente, comportant notamment une partie cylindrique extérieure 230 à l'amont, 232 à l'aval. Lesdites parties cylindriques 230 et 232 coopèrent avec des nervures circulaires 234, tournées vers l'aval pour les crochets sectorisés amont 150, et 236, tournées vers l'amont pour les crochets sectorisés aval 152, afin que les parties extérieures 230 (respectivement 232) soient en contact radial avec les nervures 234 (respectivement 236) à la fin de l'accélération mécanique de la turbomachine. Bien entendu, les léchettes 204a et 206a laissent un jeu longitudinal très faible, mais positif avec les crochets sectorisés.

On comprend facilement que de cette façon, l'étanchéité est toujours assurée, comme dans la version figurant sur les figures 1 à 4, par les bourrelets 196 (respectivement 198) sur les crochets 200 (respectivement 202) pendant tous les régimes permanents et tous les régimes de décélération, et la plus grande partie du temps de stabilisation thermique après accélération, dans les conditions décrites ci-dessus. Mais on comprend aussi également que pendant l'accélération mécanique et les quelques dizaines de secondes qui suivent, où les bourrelets 196, 198 ne sont plus en appui sur les crochets 200, 202, l'étanchéité par effet de labyrinthe décrit ci-dessus est améliorée du fait de la chicane entre 204a et 234 pour l'amont et de celle entre 206a et 236 vers l'aval, et ceci d'autant plus que cette chicane est complètement obstruée en fin d'accélération mécanique.

Sur la figure 7 on a représenté une variante, du reste évoquée précédemment, où le centrage de la virole 20, dans la partie médiane de carter 4, est obtenu non plus comme représenté sur la figure 1, par un système d'au moins trois saillies et empochements, mais par des pattes longues et flexibles 238 fixées à la fois sur la virole 20 par deux boulons, longitudinalement espacés, et sur la partie médiane de carter 4 par deux boulons 240, également longitudinalement espacés. Les pattes 238 sont au nombre d'au moins trois, régulièrement réparties. Sur la figure 7 on a représenté une solution avantageuse où la fixation des pattes 238 sur la virole 20 est faite par les mêmes boulons 178 qui servent à la fixation des pattes 174 sur ladite virole 20, de même les pattes 174 sont fixées à leur autre extrémité par les boulons 184, à épaulement, boulons qui asservissent les secteurs 84 lors de la dilatation rapide de la virole 170 et seulement lors de cette dilatation, pendant l'accélération mécanique et pour les quelques dizaines de secondes ultérieures.

Bien entendu, on ne sortirait pas du cadre de cette invention en se servant de fixations différenciées des pattes 174 sur la virole 170 et l'anneau 20, et/ou des pattes 238 sur la virole 20. On ne sortirait pas non plus du cadre de la présente invention en multipliant le nombre des appuis de bourrelets 196, 198 sur la partie cylindrique 200, 202 des crochets 150, 152 et/ou le nombre de léchettes 204, 206, pour freiner davantage le débit de fuite centripète dans les rares cas (début de l'accélération et début de stabilisation) où l'étanchéité centripète n'est pas assurée d'une façon quasi parfaite par appui radial.

**Revendications**

1. Turbomachine munie d'un dispositif d'étanchéité d'aubages mobiles, du type comportant :
— des secteurs (84) portant une garniture d'étanchéité (86) en matériau susceptible de s'user en cas de contact des extrémités d'aubes et de cette garniture ;
— une virole intérieure (170) qui se dilate d'une façon homogène pendant une phase transitoire d'accélération mécanique de la turbomachine par l'effet de la ventilation sur toute sa longueur et sa périphérie par de l'air prélevé à un étage aval de compresseur et qui asservit en position radiale dans un premier temps lesdits secteurs (84) au moyen d'éléments de liaison ;
— un anneau extérieur (20) ayant une inertie thermique supérieure à celle de ladite virole intérieure (170) et qui se dilate pendant une phase de stabilisation thermique de la turbomachine succèdant à la phase d'accélération mécanique, d'une façon homogène également par l'effet de la ventilation sur toute sa longueur et sa périphérie par de l'air prélevé à un étage aval de compresseur et amené par une multiplicité de tuyaux débouchant dans des trous (100) percés dans le carter de turbine et qui asservit également en position radiale dans un second temps lesdits secteurs (84) au moyen de crochets (150, 152), caractérisée en ce que ladite virole intérieure (170) comporte des éléments de raidissement (172) qui accroissent son inertie mécanique et est monolithique, en ce que les éléments de liaison asservissant les secteurs (84) à la virole intérieure (170) comporte des éléments élastiques permettant le déplacement radial des secteurs (84) asservis à l'anneau extérieur (20) durant la phase de stabilisation thermique sans influence directe sur la géométrie de la virole intérieure (170) et en ce que lesdits secteurs (84) comportent à leurs extrémités amont et aval au moins une série d'appuis par des bourrelets (196, 198) sur au moins une série d'épanouissements périphériques (200, 202) des crochets (150, 152) asservissant les secteurs (84) à l'anneau extérieur (20).

2. Turbomachine selon la revendication 1, caractérisée en ce que les éléments de liaison entre les secteurs (84) et la virole intérieure (170) sont constitués de vis radiales (184) qui sont fixées solidairement sur la virole intérieure (170) et dont les têtes (182) sont emprisonnées en laissant un jeu radial dans des empochements (180) prévus vers les quatre coins des secteurs (84), et de ressorts (192) entourant les tiges des vis (184) et montés en compression entre les secteurs (84) et la virole intérieure (170).

3. Turbomachine selon l'une des revendications 1 ou 2 caractérisée en ce que les crochets (150, 152) de liaison entre les secteurs (84) et l'anneau extérieur (20) sont sectorisés et que des lamelles (208, 210) sont insérées dans des fentes (212) prévues dans l'épaisseur de crochets voisins assurant l'étanchéité et en ce que les crochets (150, 152) comportent au moins trois saillies (160, 162) sensiblement régulièrement réparties sur la périphérie et coopérant avec des empochements (164) ménagés dans des prolongements (10, 14) des parties du carter amont (2) et aval (6).

4. Turbomachine selon l'une quelconque des revendications précédentes caractérisée en ce que chaque secteur (84) comporte une léchette (204) côté amont et une léchette (206) côté aval placées en position radiale extérieure par rapport aux bourrelets (196, 198) et formant avec lesdits bourrelets (196, 198) un joint à labyrinthe.

5. Turbomachine selon l'une quelconque des revendications 1 à 3, caractérisée en ce que chaque crochet sectorisé (150, 152) comporte une nervure circulaire (234, 236) orientée vers les secteurs (84) et coopérant avec des léchettes (204a, 206a) des secteurs (84) comportant une partie cylindrique extérieure (230, 232).

6. Turbomachine selon l'une quelconque des revendications précédentes, caractérisée en ce que au moins trois pattes obliques (174) relativement longues, flexibles et régulièrement réparties sur la périphérie relient par boulons (176, 178) la virole intérieure (170) à l'anneau extérieur (20).

7. Turbomachine selon la revendication 4, caractérisée en ce que les fixations des pattes (174) sur la virole intérieure (170) sont confondues avec les fixations sur ladite virole (170) des éléments de liaison aux secteurs (84).

8. Turbomachine selon l'une quelconque des revendications 1, 2 et 4 à 7 caractérisée en ce que au moins trois pattes (238) obliques, longues et flexibles relient par boulons (178, 240) l'anneau extérieur (20) à la partie médiane (4) du carter de turbine.

### Claims

1. Turbo machine provided with a sealing arrangement for the rotor blades, of the type comprising :
— sectors (84) carrying a sealing lining (86) of material intended to wear away in case of contact between the tips of the blades and this lining ;
— an inner annular member (170) which expands in a homogeneous manner during a mechanical transitory acceleration phase of the turbo machine by the action of cooling flow over its whole length and periphery by air bled from a downstream stage of the compressor and which brings under control in a radial position in a first time the said sectors (84) by means of connecting members ;
— an outer annular member (20) having a thermal inertia which is higher than that of the said inner annular member (170) and which expands during a thermal stabilization phase of the turbo machine following the mechanical acceleration phase, in a homogeneous manner likewise under the action of cooling flow over the whole of its length and its periphery by air bled from a downstream stage of the compressor and directed by a multiplicity of nozzles discharging into holes (100) provided in the turbine casing and which brings under control similarly in radial positions in a second time the said sectors (84) by means of brackets (150, 152), characterized in that the said inner annular member (170) comprises reinforcing members (172) which augment its mechanical inertia and is in one piece, in that the connecting members bringing under control the sectors (84) at the inner annular member (170) comprise resilient members enabling radial displacement of the sectors (84) bringing under control the outer annular member (20) during the thermal stabilization phase without direct influence on the geometry of the inner annular member (170) and in that the said sectors (84) comprise at their upstream and downstream ends at least one series of abutments by fillets (196, 198) on at least one series of peripheral flanged members (200, 202) of hooks (150, 152) bringing under control the sectors (84) at the outer annular member (20).

2. Turbo machine according to claim 1, characterized in that the connecting members between the sectors (84) and the inner annular member (170) are constituted by radial screws (184) which are rigidly secured on the inner annular member (170) and of which the heads (182) are captive whilst leaving a radial clearance in pockets (180) provided at the four corners of the sectors (84), and springs (192) surrounding the shanks of the screws (184) and mounted in compression between the sectors (84) and the inner annular member (170).

3. Turbo machine according to one of claims 1 or 2 characterized in that the hooks (150, 152) connecting the sectors (84) and the outer annular member (20) are divided into sectors and that laminar members (208, 210) are inserted in slots (212) provided within the thickness of adjacent hooks thus ensuring fluidtightness and in that the hooks (150, 152) comprise at least three projections (160, 162) substantially regularly distributed on the periphery and cooperating with pockets (164) formed in extensions (10, 14) of upstream (2) and downstream (6) parts of the casing.

4. Turbo machine according to any one of the preceding claims characterized in that each sector (84) comprises a lip (204) at the upstream side and a lip (206) at the downstream side located in radial position externally with respect to the flanged members (196, 198) and forming with the flanged members (196, 198) a labyrinth seal.

5. Turbo machine according to any one of claims 1 to 3, characterized in that each bracket sector (150, 152) comprises a circular rib (234, 236) directed towards the sectors (84) and cooperating with lips (204a, 206a) of the sectors (84) comprising an outer cylindrical part (230, 232).

6. Turbo machine according to any one of the preceding claims, characterized by at least three inclined tabs (174) which are relatively long, flexible and regularly distributed on the periphery connect by bolts (176, 178) the inner annular member (170) to the outer annular member (20).

7. Turbo machine according to claim 4, characterized in that the means for securing the tabs (174) on the outer annular member (170) are interdigitated with the securing members on the said annular member (170) of the connecting members to the sectors (84).

8. Turbo machine according to any one of claims 1, 2 and 4 to 7 characterized in that at least three tabs (238) inclined, long and flexible connect by bolts (178, 240) the outer annular member (20) to the median part (4) of the turbine casing.

**Patentansprüche**

1. Turbomaschine mit einer Vorrichtung zur Laufschaufelabdichtung :
— mit Segmenten (84), die einen Dichtungsbesatz (86) aus einem Werkstoff tragen, der sich im Fall einer Berührung zwischen den Schaufelenden und diesem Dichtungsbesatz verbrauchen kann,
— mit einem Innenring (170), der sich während einer Übergangsphase mechanischer Beschleunigung der Turbomaschine aufgrund von Ventilation mit einer stromabwärtigen Verdichterstufe entnommener Luft über seine gesamte Länge und seinen Umfang gleichmäßig ausdehnt und der in einer ersten Zeitspanne die Segmente (84) in ihrer radialen Position mit Hilfe von Verbindungselementen festlegt,
— sowie mit einem Außenring (20), der eine größere thermische Trägheit besitzt als der Innenring (170) und der sich während einer auf die mechanische Beschleunigungsphase folgenden termischen Stabilisationsphase aufgrund von Ventilation mit einer stromabwärtigen Verdichterstufe entnommener und durch eine Mehrzahl von an in dem Turbinengehäuse angebrachten Löchern (100) mündenden Leitungen geführter Luft über seine gesamte Länge und seinen Umfang ebenfalls gleichmäßig ausdehnt, und der (20) in einer zweiten Zeitspanne die genannten Segmente (84) mit Hilfe von Verbindungshaken (150, 152) in ihrer radialen Position gleichfalls festlegt, dadurch gekennzeichnet, daß der genannte Innenring (170) seine mechanische Trägheit vergrößernde Versteifungselemente (175) aufweist und einstückig ausgebildet ist, daß die die Segmente (84) an dem Innenring (170) festlegenden Verbindungselemente elastische Elemente umfassen, die während der thermischen Stabilisationsphase eine elastische Verschiebung der an dem Außenring (20) festgelegten Segmente (84) ermöglichen, ohne daß ein direkter Einfluß auf die Geometrie des Innenrings (170) stattfindet, und daß die Segmente (84) an ihren stromaufwärtigen und stromabwärtigen Enden wenigstens eine Reihe von Wülsten (196, 198) aufweisen, mit denen sie sich auf wenigstens einer Reihe von umlaufenden Erhebungen (200, 202) der Haken (150, 152) abstützen, die die Segmente (84) an dem Außenring (20) festlegen.

2. Turbomaschine nach Anspruch 1, dadurch gekennzeichnet, daß die zwischen den Segmenten (84) und dem Innenring (170) wirkenden Verbindungselemente aus folgenden Teilen bestehen : radialen Schrauben (184), die mit dem Innenring (170) fest verbunden sind und deren Köpfe (170) mit radialem Spiel in Taschen (180) festgehalten sind, die in Richtung der vier Ecken der Segmente (84) vorgesehen sind, sowie Federn (192), die die Schafte der Schrauben (184) umgeben und unter Kopression zwischen den Segmenten (84) und dem Innenring (170) angeordnet sind.

3. Turbomaschine nach einem der Ansprüche 1 oder 2, dadurch gekennzeichnet, daß die zwischen den Segmenten (84) und dem Außenring (20) wirksamen Verbindungshaken (150, 152) sektorisiert sind und in in der Dickenausdehnung benachbarter Verbindungshaken angebrachten Schlitzen (212) Dichtungslamellen (208, 210) eingesetzt sind, und daß die Verbindungshaken (150, 152) wenigstens drei Vorsprünge (160, 162) aufweisen, die annähernd gleichmäßig über den Umfang verteilt sind und mit Taschen (164) zusammenwirken, die in Verlängerungen (10, 14) der stromaufwärtigen (2) und stromabwärtigen (6) Teilen des Gehäuses angebracht sind.

4. Turbomaschine nach einem der vorhergehenden Ansprüche, dadurch gekennzeichnet, daß jeder Sektor (84) eine stromaufwärtige und eine stromabwärtige Zunge (204 bzw. 206) besitzt, die gegenüber den genannten Erhebungen (196, 198) radial außen positioniert sind und mit diesen Erhebungen (196, 198) eine Labyrintdichtung bilden.

5. Turbomaschine nach einem der Ansprüche 1 bis 3, dadurch gekennzeichnet, daß jeder der sektorisierten Verbindungshaken (150, 152) eine kreisförmige Rippe (234, 236) besitzt, die in Richtung auf die Segmente (84) orientiert ist und mit Zungen (204a, 206a) der Segmente (84) zusammenwirkt, welche ein zylindrisches Außenteil (230, 232) beinhalten.

6. Turbomaschine nach einem der vorhergehenden Ansprüche, dadurch gekennzeichnet, daß wenigstens drei vergleichsweise lange, flexible und gleichmäßig über den Umfang verteilte, geneigte Klammern (174) den Innenring (170) über Schraubenbolzen (176, 178) mit dem Außenring (20) verbinden.

7. Turbomaschine nach Anspruch 6, dadurch gekennzeichnet, daß die Befestigungen der Klammern (164) an dem Innenring (170) mit den innenringsseitigen Befestigungen der Verbindungselemente der Segmente (84) zusammengefaßt sind.

8. Turbomaschine nach einem der Ansprüche 1 oder 2 und 4 bis 8, dadurch gekennzeichnet, daß wenigstens drei geneigte, langgestreckte und flexible Klammern (238) den Außenring (20) über Schraubenbolzen (178, 240) mit dem mittleren Teil (4) des Turbinengehäuses verbinden.

Fig. 1

Fig. 2

FIG-3

0 132 182

Fig. 4

Fig. 5

234

236

204 a

230

232

206 a

0 132 182

Fig. 6

Fig-7

0 132 182